# FASCICULE DE BREVET EUROPEEN

(11) **EP 2 616 269 B1**
(45) Date de publication et mention de la délivrance du brevet: **27.03.2019**
(21) Numéro de dépôt: 11773093.7
(22) Date de dépôt: 15.09.2011
(51) Int. Cl.: B60N 2/36, B60N 2/30, B60R 7/04

(54) **SIEGE POUR VEHICULE AUTOMOBILE**
SITZ FÜR EIN KRAFTFAHRZEUG
SEAT FOR A MOTOR VEHICLE

(30) Priorité: 16.09.2010 FR 1057403
(43) Date de publication de la demande: 24.07.2013
(73) Titulaire: Renault s.a.s., 92100 Boulogne-Billancourt (FR)
(72) Inventeur: MESLIN, Guy, F-78370 Plaisir (FR)
(86) Numéro de dépôt international: PCT/FR2011/052120
(87) Numéro de publication internationale: WO 2012/035267

(56) Documents cités:
- DE-A1- 10 238 888
- FR-A1- 2 905 639
- US-A1- 2004 239 137
- US-A1- 2010 084 899

## Description

La présente invention concerne un siège pour véhicule automobile et un véhicule comprenant un tel siège.

Dans le domaine, on connaît déjà un siège comprenant :
- (au moins) un dossier arrière s'étendant dans un plan général dressé pour y recevoir le dos d'un occupant du siège,
- (au moins) un coussin d'assise s'étendant dans un plan général sensiblement horizontal en position (opérationnelle) normale d'assise et présentant un bord transversal arrière, le long du bas du dossier, et un bord transversal avant opposé,
- une structure de siège s'étendant sous au moins un coussin d'assise et délimitant là un espace vide, ouvert vers le haut et fermé à l'avant par un volet mobile lié à l'assise, en position normale d'assise.

D'autres sièges pourvus de telles structures s'étendant sous au moins un coussin d'assise et délimitant un espace vide sont connus, par exemple, des documents FR 2 905 639 A1 et US 2004/0239137 A1.

Un problème qui se pose concerne l'accès au volume de rangement, limité par l'encombrement dudit siège et les normes de sécurité des passagers.

En effet les inconvénients suivants ont été notés :
- risque de blesser les membres inférieurs des passagers,
- difficulté pour loger des charges longues, typiquement plus longue que la plus grande dimension du coffre,
- manque d'espaces de rangement au vu de l'agencement des équipements du véhicule.

En vue de tendre vers une solution à une partie au moins du problème et/ou des inconvénients ci-dessus mentionnés, il est conseillé, selon l'invention telle que définie dans la revendication 1, que le coussin d'assise soit monté pivotant par rapport à la structure de siège :
- près de son bord transversal avant pour basculer vers l'avant depuis sa position normale d'assise, autour d'un axe transversal avant, et libérer ainsi l'accès par-dessus au dit espace vide, et,
- près de son bord transversal arrière pour basculer vers l'arrière depuis ladite position normale d'assise, autour d'un axe transversal arrière sensiblement parallèle à l'axe transversal avant, et relever alors avec lui le volet mobile en libérant ainsi un passage à l'avant du siège entre ledit espace vide et l'extérieur.

On recommande que la structure de la banquette accompagne le coussin d'assise dans une telle combinaison de deux cinématiques.

Pour favoriser encore davantage la sécurité, on conseille que la structure dudit siège soit telle que l'assise et le dossier sont surélevés de manière à ce que le poids du siège soit supporté par ladite structure et jamais par le volet mobile en position de fermeture de l'accès au dit espace, par l'avant, et/ou en position opérationnelle normale d'assise du coussin d'assise.

Favorablement, pour initier dans les meilleures conditions les deux cinématiques, on recommande par ailleurs que le siège comprenne un cadre filamentaire intermédiaire, s'étendant sous le coussin d'assise, au moins le long des côtés latéraux et du bord avant de celui-ci, mais aussi des pivots avant entre le coussin d'assise et le cadre filamentaire pour ledit basculement du coussin d'assise autour de l'axe transversal avant, et enfin des pivots arrière entre le cadre filamentaire et la structure de siège pour ledit basculement du coussin d'assise et du cadre filamentaire, autour de l'axe transversal arrière.

Concernant le cadre filamentaire, pour limiter l'encombrement du basculement vers l'avant du coussin d'assise, on conseille en outre qu'il présente un tronçon transversal avant s'étendant au moins sous et le long du dit bord avant du coussin d'assise autour duquel pourra pivoter le volet, en liaison pivot avec l'ensemble (armature de l'assise, cadre filamentaire) et d'axe transversal. Une variante consiste à monter le volet solidairement avec ledit ensemble. Le volet et cet ensemble sont alors en liaison fixe. Cette dernière solution est plus simple à mettre en oeuvre et plus économique que la première qui offre une sécurité concernant le mouvement du volet, en permettant en outre éventuellement d'utiliser les glissières pour verrouiller le coulissement en bout de mouvement, de façon réversible.

Concernant le véhicule où on conseille de le loger, on envisage préférentiellement qu'il s'agisse d'un véhicule comprenant une rangée avant de sièges et une rangée arrière de sièges située derrière, l'un au moins des sièges de la rangée arrière étant celui du type présenté plus haut.

Par ailleurs, pour éviter toute cinématique du coussin d'assise non désirée, on recommande qu'en position normale d'assise du coussin d'assise, le cadre filamentaire soit solidaire de la structure du siège par l'intermédiaire d'un crochet en liaison fixe avec ledit cadre filamentaire et qui se décroche pour permettre le basculement à l'endroit des pivots arrière.

Toujours pour favoriser le passage de charges longues, on recommande aussi que ledit véhicule comprenne un plancher auquel est fixé le siège, ce plancher s'étendant essentiellement horizontalement en avant du siège, sous lui et derrière lui, et sous le coussin d'assise la structure de siège étant alors ouverte à l'arrière et offrant à l'endroit de l'espace vide, en position relevé du volet, un libre passage à ladite charge, à l'avant et à l'arrière.

Pour valoriser la solution en cas de très grandes charges et sur un véhicule à banquette arrière on préfèrera par ailleurs que le siège dudit véhicule comprenne deux dossiers et deux assises côte à côte, le cadre filamentaire s'étendant alors sous les deux coussins d'assise, les pivots arrière comprenant un premier pivot situé sous l'un des coussins d'assise et un second pivot situé sous l'autre coussin d'assise pour que les deux coussins d'assise pivotent conjointement autour desdits pivots arrière.

En outre, il est souhaitable que la structure du siège s'étende entre les deux sièges, sous ces-derniers, afin de pouvoir dissocier les deux coussins d'assise dans le cadre d'un basculement vers l'avant. Il n'est alors pas nécessaire de faire basculer l'ensemble de la banquette pour n'accéder par le dessus qu'à une partie de l'espace vide.

Une description détaillée de deux modes de réalisation va maintenant être présentée, à titre d'exemple privilégié mais non limitatif, en référence à des dessins où :
- la figure 1 présente une vue de ¾ haut d'une partie de siège sur la base d'un premier mode de réalisation avec glissières et liaison pivot entre le volet et le cadre filamentaire.
- la figure 2 est une vue d'une autre partie du même siège en perspective, qui montre ce qui passe lors d'un basculement du coussin d'assise vers l'arrière.
- la figure 3 est une vue de face d'un ensemble de deux coussins d'assise et deux dossiers, sur la base du premier mode de réalisation.
- la figure 4 est une vue locale de ¾ en perspective d'un groupe de sièges côte-à-côte, adjacents. On peut y voir une première zone de rangement accessible par le dessus du siège et délimitée à l'avant par le volet. Est illustrée une seconde cinématique de pivotement du coussin d'assise vers l'avant,
- la figure 5 est une vue de détail intérieur d'une zone du siège dans la position du coussin d'assise 1b de la figure 4,
- la figure 6 est une vue en coupe latérale du siège, précisant les deux axes des pivots avant et arrière permettant les deux cinématiques,
- la figure 7 est une vue en coupe latérale du siège illustrant la seconde cinématique de pivotement vers l'arrière du coussin d'assise, sur la base du premier mode de réalisation. On peut repérer l'espace accessible pour une charge longue,
- la figure 8 est une vue en coupe latérale du siège illustrant la même seconde cinématique, sur la base du second mode de réalisation.

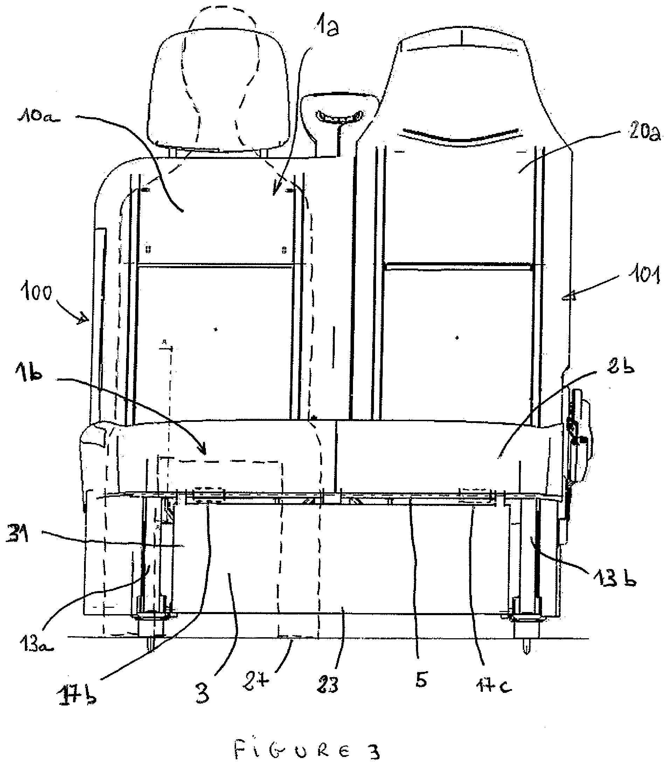

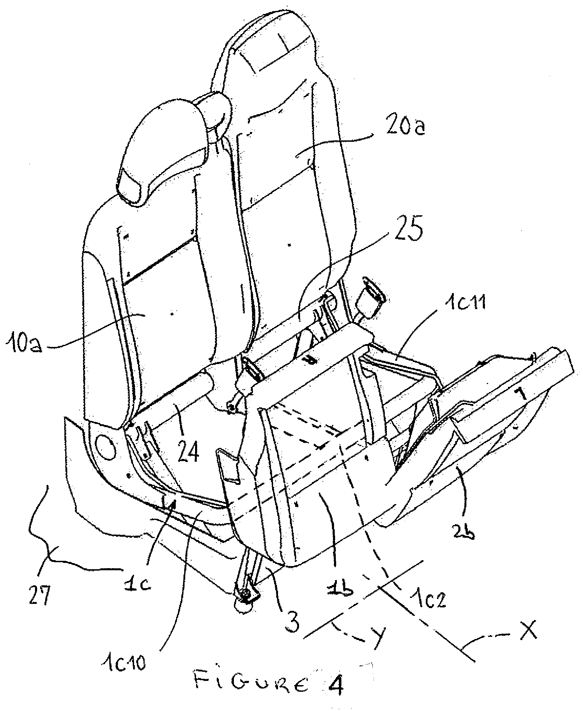

Sur les figures 3, 4, 6 notamment, on voit un siège incluant au moins un dossier la, comprenant un coussin de dossier 10a lié fixement à une armature de dossier 11a qui est fixe dans l'ensemble. Le siège comprend également au moins un coussin d'assise 1b et une structure de siège 1c qui, par dessous, suit les contours de chaque coussin d'assise, au moins sur les deux côtés latéraux 1c10, 21c11 et le côté frontal 1c2 (figure 4).

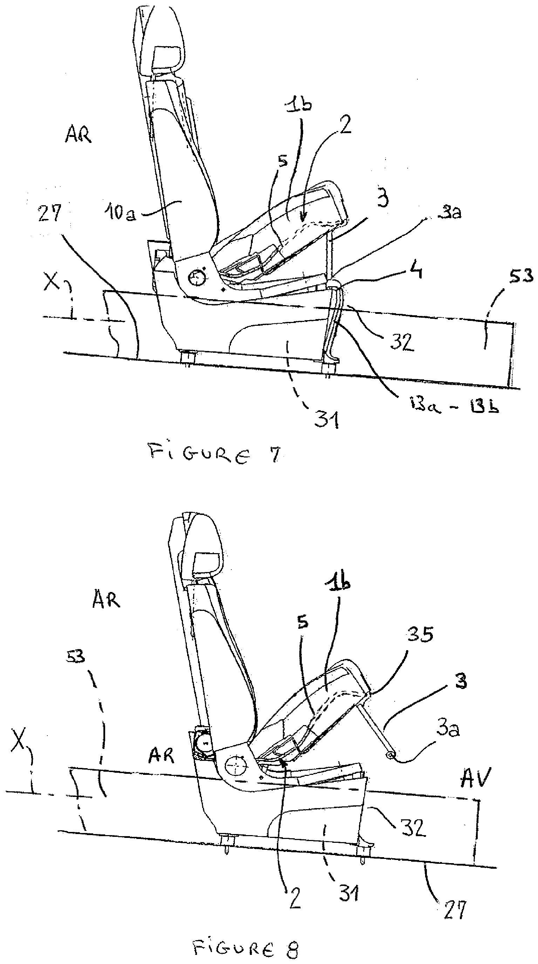

La structure de siège 1c sert à ordonner et maintenir l'ensemble des composantes du siège. Cette structure est telle que le coussin d'assise 1b, comprenant une armature d'assise 2 (figures 7, 8), et le dossier la sont surélevés par rapport au plancher 27 du véhicule auquel le siège est fixé par la structure de siège 1c, qui descend jusqu'à ce plancher, sous le coussin d'assise 1b.

Sous le siège, lorsque celui-ci est en position normale d'assise (situation dans laquelle un passager peut s'asseoir normalement), est ainsi offert un espace vide (ou volume de rangement) délimité en hauteur par le coussin d'assise et en profondeur, uniquement à l'avant (AV), par un volet 3 ; voir figures 3, 4, 6, 8.

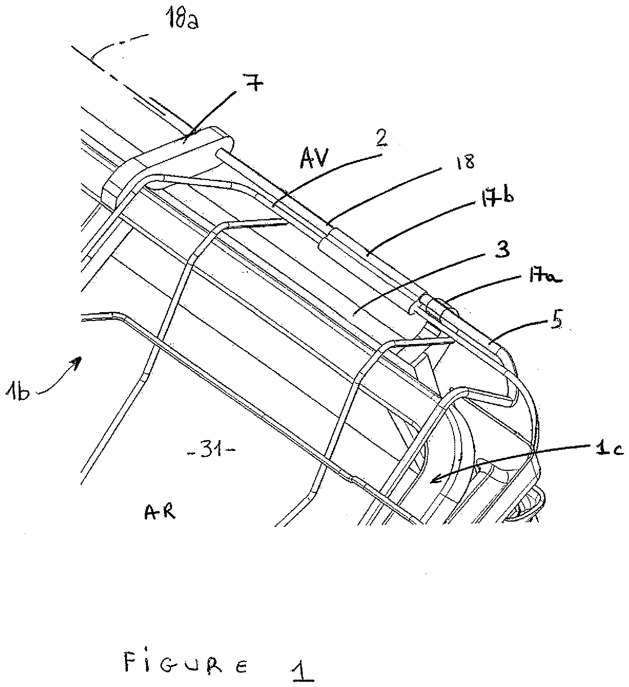

Le volet 3, dans une première réalisation (voir les figures 1, 3, 7), en liaison pivot 17a avec un cadre filamentaire 5, s'étend dans l'axe des glissières 13a et 13b fixées à la structure de siège et dressées là, latéralement, sous le coussin d'assise 1b.

Dans une seconde réalisation (voir la figure 8), en liaison fixe avec le cadre filamentaire 5, le volet 3 fait un angle compris entre 60° et 90° avec ledit cadre filamentaire, selon le degré d'horizontalité du coussin d'assise 1b, pour permettre de lier rigidement le volet à la structure de siège 1c. Coussin d'assise 1b ainsi basculé vers l'arrière et le haut, le volet 3 basculé à l'identique, donc ouvert, est perpendiculaire à lui, sous lui, et sa partie inférieure avant 3a s'étend en avant du passage 32 d'accès frontal à l'espace interne 31.

Dans les deux cas, la dimension du volet 3 est celle de la section correspondant au passage frontal d'accès à l'espace vide 31 (voir figures 1, 2, 5) situé sous le coussin d'assise et qui est à la fois ouvert vers le haut et fermé à l'avant par le volet mobile 3 en position normale d'assise dans laquelle le coussin d'assise reçoit un occupant normalement assis contre le dossier, tel 10a ; voir figure 3. On précise que le coussin d'assise 1b est considéré s'étendre alors dans un plan général « horizontal », en ce sens où, même si le coussin peut alors plonger un peu vers l'arrière et le bas, cette position normale d'assise est effectivement sensiblement horizontale.

Le poids du siège est alors supporté par la structure de siège 1c et jamais par le volet 3 en position de fermeture de l'accès à l'espace 31 par l'avant, et/ou en position normale d'assise du coussin d'assise montrée figure 3.

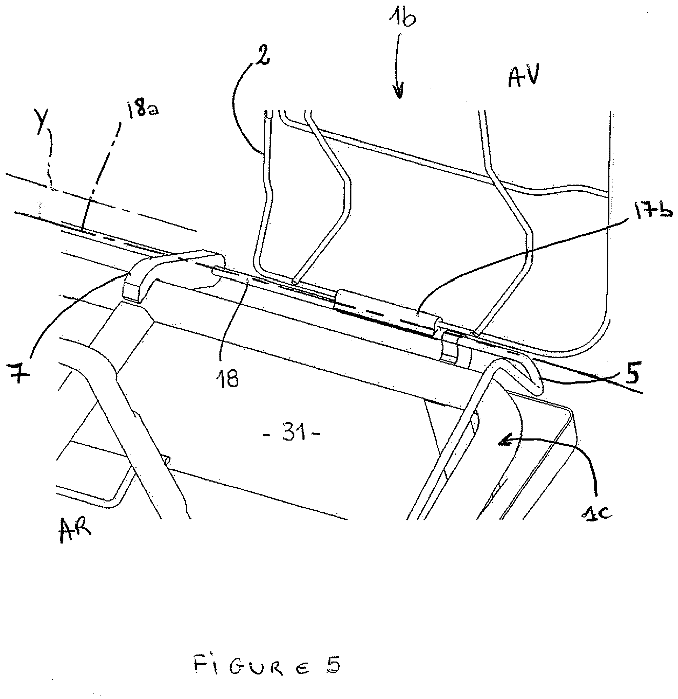

Les figures 1, 5 présentent ces éléments accompagnés du cadre filamentaire 5 en forme générale de U dans son tronçon transversal avant 18, sous la forme d'une tige métallique, pleine ou creuse de diamètre pouvant être compris entre 7 et 11 millimètres.

Cette tige est établie entre le coussin d'assise 1b et la structure de siège 1c et présente comme dimension sensiblement celle du coussin d'assise dans l'axe longitudinal (direction X) et celle d'au moins un coussin d'assise dans l'axe transversal du siège (direction Y). Le cadre filamentaire 5 se prolonge à l'avant (AV) de la structure de siège 1c, en étant incurvé de manière à suivre la courbure imposée par cette dernière.

Cette disposition permet à un crochet 7 (voir figure 5), en liaison fixe avec le cadre filamentaire 5, de solidariser par défaut l'ensemble (structure du siège 1c, cadre filamentaire 5) en position normale d'assise.

Ceci doit permettre d'annuler les effets de l'énergie cinétique stockée dans le coussin d'assise 1b, en cas de choc à l'avant AV ou à l'arrière AR du véhicule. Le crochet doit empêcher ainsi le déclenchement inopiné des deux cinématiques mentionnées plus haut, dans le cas de tels chocs.

Le volet 3 en liaison pivot 17a avec le cadre filamentaire 5 permet, lors du pivotement du coussin d'assise vers l'arrière, de libérer le passage 32 d'accès par l'avant au volume de rangement 31 situé sous le coussin d'assise 1b (figures 7, 8).

Ce pivotement induit en effet un mouvement vertical du volet 3, rendu rectiligne à sa base 3a par l'intermédiaire des glissières 13a et 13b. Il permet en outre de verrouiller la cinématique en position relevée (inclinée vers l'arrière) du coussin d'assise 1b (voir la figure 7). En effet, la glissière dans sa partie haute 4 se poursuit dans l'axe de la structure de siège 1c permettant ainsi au volet 3 de ne pas retomber vers l'avant sous l'effet de son poids.

La variante consistant à monter le volet 3 en liaison fixe 35 avec le cadre filamentaire 5, comme illustré figure 8, permet de ne pas avoir à gérer de glissière entre le volet 3 et la structure du siège 1c.

Le volet est alors en liaison plane avec l'extrémité de la structure du siège en position opérationnelle normale d'assise. Cette variante oblige cependant la personne à maintenir elle-même le coussin d'assise en position relevée.

Les figures 4, 5, 6 illustrent une première cinématique permise grâce aux liaisons pivot 17b et 17c (figure 3) entre l'armature d'assise 2 et le cadre filamentaire 5 pour le basculement vers l'avant du coussin d'assise 2b. Les liaisons pivot 17b, 17c sont a priori toutes deux identiques.

Ce basculement a pour axe 18a celui formé par le tronçon transversal avant 18 du cadre filamentaire 5, parallèle à l'axe Y du véhicule, s'étendant sous un ensemble de deux coussins d'assise 1b et 2b (voir la figure 5).

Les liaisons pivot 17b et 17c autorisent le basculement séparé des deux coussins d'assise et des deux armatures d'assise autour de l'axe 18a. Lors de cette cinématique, le crochet 7 solidarise l'ensemble (structure du siège 1c, cadre filamentaire 5), permettant ainsi également une meilleure répartition des efforts sur les pièces.

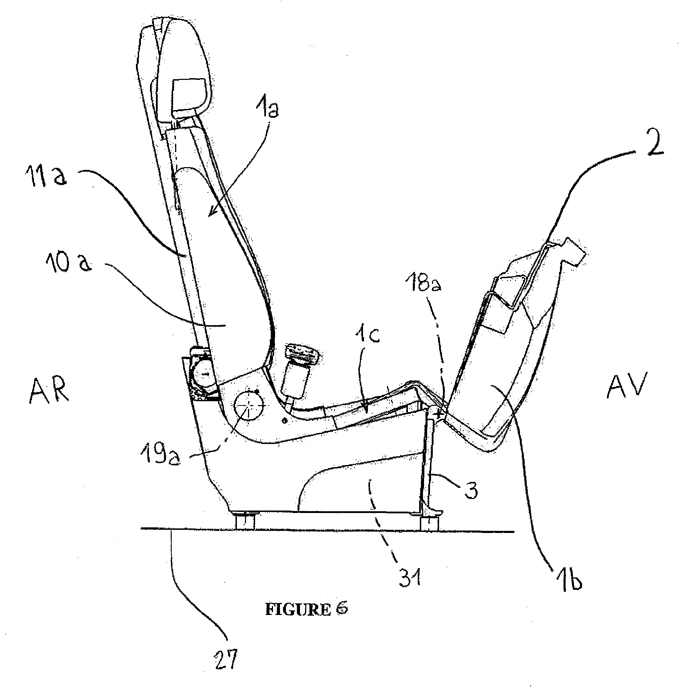

Cette rotation, qui amène le coussin 1b vers la verticale, voire un peu au-delà (voir figures 4, 6), offre un accès correct, par le dessus, au volume 31 de rangement sous le siège délimité à l'avant par le volet 3, comme illustré en figure 5.

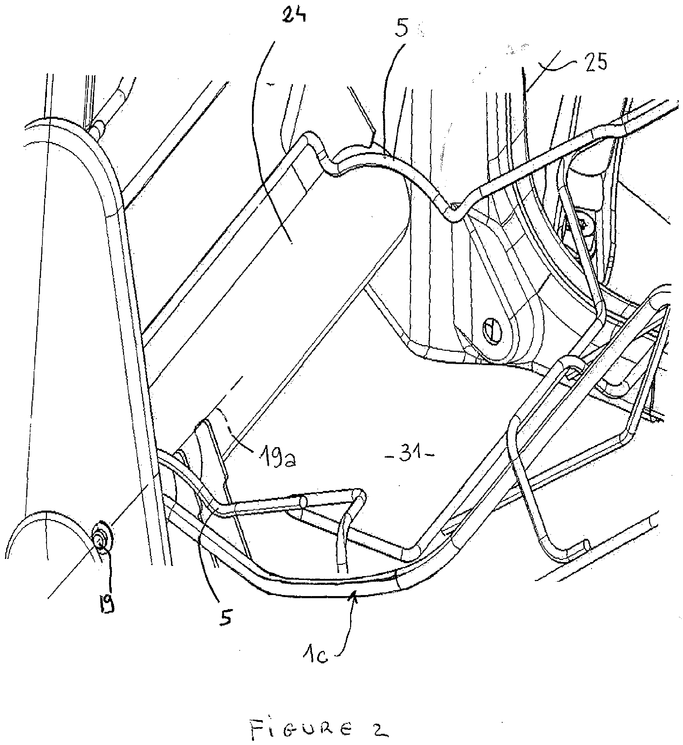

La figure 2 illustre une seconde cinématique par l'intermédiaire de la liaison pivot 19 de centre les extrémités arrière du cadre filamentaire 5 et d'axe 19a parallèle à l'axe Y du véhicule.

Cette rotation du cadre filamentaire 5 s'accompagne du basculement de l'armature d'assise 2, et donc du coussin d'assise, autour d'un cylindre 24, d'axe 19a et fixé à la structure de siège 1c latéralement.

Pour ce faire, l'armature d'assise 2 est telle que sa partie transversale arrière a une forme arrondie afin d'épouser le contour dudit cylindre. Les deux rotations se font conjointement puisque l'armature d'assise 2 est liée au cadre filamentaire 5 (par la liaison pivot 17b ; idem pour l'autre coussin d'assise avec la liaison 17c) et forment la seconde cinématique. Lors de cette dernière, le crochet 7 se désolidarise naturellement de l'ensemble (structure du siège 1c, cadre filamentaire 5) du fait de la direction de l'effort destiné à engager la rotation du coussin d'assise et du verrouillage uniquement sensiblement longitudinal du crochet 7, comme montré figure 5. Ceci permet un mouvement de rotation de l'ensemble (coussin d'assise, cadre filamentaire, volet) autour de l'axe 19a.

Lorsque le volet 3 est monté en liaison pivot avec le cadre filamentaire 5 et donc en liaison glissière avec la structure du siège 1c, l'angle de rotation peut être compris entre 30° et 45°, la rotation étant limitée par la longueur de la glissière.

La variante détaillée plus haut peut permettre une rotation d'angle compris entre 45° et 60°, la rotation n'étant bornée que par l'encombrement du coussin d'assise.

La rotation, dans les deux variantes, libère le passage sous le siège, permet d'y loger une charge longue 53, et empêche toute personne de s'y installer, comme illustré en figures 7 et 8 (on risque sinon notamment de casser le volet 3, qui est typiquement en plastique, et/ou d'endommager les glissières 13a et 13b, le poids de la personne venant s'appliquer sur ces dernières).

Ainsi, le basculement vers l'arrière du coussin d'assise, qui a relevé avec lui le volet mobile, a libéré le passage 32 à l'avant du siège entre l'espace vide intérieur 31 et l'extérieur. Figures 7, 8, on voit que la charge longue 53, engagée parallèlement à l'axe longitudinal horizontal X, peut ressortir à l'arrière (AR) du siège, derrière lui si le plancher 27 du véhicule au-dessus duquel se dresse le siège ou la banquette (comme figure 3) s'étend essentiellement horizontalement en avant du siège, sous lui et derrière lui, de façon plane, sans différence notable de niveau.

De préférence, les considérations qui précèdent s'appliqueront à des sièges ou une banquette arrière situé(e)s derrière une rangée de sièges avant sur l'un desquels s'assoit au moins le conducteur du véhicule.

Ainsi, figure 3, il s'agira favorablement d'une rangée arrière de sièges 100, 101 située derrière une rangée avant (non représentée).

A partir des figures 2, 3, 4, on comprendra en outre que le siège pourra utilement comprendre deux dossiers 10a, 20a et deux assises 1b, 2b côte à côte (figure 3), la structure de siège (1c) s'étendant de façon commune sous les deux assises 1b, 2b (figure 4) et les pivots arrière comprennent un premier pivot 24 situé sous l'un des coussins d'assise et un second pivot 25 situé sous l'autre coussin d'assise. Ainsi, les deux coussins d'assise pourront pivoter ensemble autour des ces pivots arrière, comme on le comprend au vu de la figure 2.

## Revendications

1. Siège pour véhicule automobile comprenant :
- un dossier arrière (10a,20a) s'étendant dans un plan général dressé pour y recevoir le dos d'un occupant du siège,
- un coussin d'assise (1b,2b) s'étendant dans un plan général horizontal en position normale d'assise et présentant un bord transversal arrière, le long du bas du dossier, et un bord transversal avant opposé,
- une structure de siège (1c) s'étendant au moins sous le coussin d'assise et délimitant là un espace vide (31), ouvert vers le haut et fermé à l'avant par un volet mobile (3), lié à l'assise, en position normale d'assise dans laquelle le coussin d'assise (1b,2b) reçoit un occupant normalement assis contre le dossier, **caractérisé en ce que** le coussin d'assise (1b) est monté pivotant par rapport à la structure de siège (1c) :
- près de son bord transversal avant pour basculer vers l'avant depuis sa position normale d'assise, autour d'un axe transversal avant (18a), et libérer ainsi l'accès par-dessus au dit espace vide (31), et,
- près de son bord transversal arrière pour basculer vers l'arrière depuis ladite position normale d'assise, autour d'un axe transversal arrière (19a) sensiblement parallèle à l'axe transversal avant, et relever alors avec lui le volet mobile (3)en libérant ainsi un passage (32) à l'avant du siège entre ledit espace vide et l'extérieur.

2. Siège selon la revendication 1, **caractérisé en ce que** la structure de siège (1c) définit, pour le coussin d'assise (1b,2b) et le dossier (10a,20a), leur moyen d'appui au sol en les surélevant au-dessus du dit espace et en supportant leur poids, de sorte que le volet (3) est déchargé de ce poids en position de fermeture de l'accès (32) au dit espace (31), par l'avant, et/ou en position normale d'assise du coussin d'assise.

3. Siège selon l'une des revendications 1, 2, **caractérisé en ce qu'**il comprend :
- un cadre filamentaire (5) intermédiaire établi entre le coussin d'assise (1b, 2b) et la structure de siège (1c) et s'étendant sous le coussin d'assise, au moins le long des côtés latéraux (1c10,1c11) et du bord avant de celui-ci,
- des pivots avant entre le coussin d'assise et le cadre filamentaire (5), pour ledit basculement du coussin d'assise autour de l'axe transversal avant (18a), et
- des pivots arrière (24, 25) entre le cadre filamentaire (5) et la structure de siège (1c) pour ledit basculement du coussin d'assise, avec ce cadre filamentaire (5), autour de l'axe transversal arrière.

4. Siège selon l'une des revendications 1 à 3, **caractérisé en ce que** le cadre filamentaire (5) présente un tronçon transversal avant (18) s'étendant sous et le long du dit bord avant du coussin d'assise (1b, 2b) et le volet (3) est lié au cadre filamentaire (5) et s'étend le long du dit tronçon transversal avant (18) de ce cadre.

5. Siège selon l'une des revendications 1 à 3, **caractérisé en ce que** le volet (3) est lié de façon pivotante au cadre filamentaire (5) et coulisse sur des glissières (13a, 13b) fixées à la structure de siège (1c) et dressées latéralement sous le coussin d'assise (1b, 2b) .

6. Véhicule automobile comprenant une rangée avant de sièges et une rangée arrière de sièges (100, 101) située derrière, **caractérisé en ce que** l'un au moins des sièges de la rangée arrière (100, 101) est celui selon l'une des revendications 1 à 5.

7. Véhicule selon la revendication 6, **caractérisé en ce qu'**en position normale d'assise du coussin d'assise (1b, 2b), le cadre filamentaire (5) est retenu avec la structure de siège (1c) par un crochet (7) établi entre eux et qui peut se décrocher, pour permettre le basculement à l'endroit des pivots arrière (24, 25).

8. Véhicule selon l'une des revendications 6, 7, **caractérisé en ce qu'**il comprend un plancher (27) auquel est fixé le siège, ce plancher s'étendant essentiellement horizontalement en avant du siège, sous lui et derrière lui, et, sous le coussin d'assise (1b, 2b), la structure de siège (1c) est ouverte à l'arrière et offre à l'endroit de l'espace vide (31), en position relevé du volet (3), un libre passage (32) à une charge (53) à l'avant et à l'arrière.

9. Véhicule selon l'une des revendications 6 à 8, **caractérisé en ce que** le siège comprend deux dossiers (10a,20a) et deux assises (1b,2b) côte à côte, la structure de siège (1c) s'étendant de façon commune sous les deux assises (1b, 2b) et les pivots arrière (24, 25) comprennent un premier pivot (24) situé sous l'un des coussins d'assise et un second pivot (25) situé sous l'autre coussin d'assise pour que les deux coussins d'assise pivotent ensemble autour des dits pivots arrière.

## Patentansprüche

1. Sitz für ein Kraftfahrzeug, umfassend:
- eine hintere Rücklehne (10a, 20a), die sich in einer allgemein ausgerichteten Ebene erstreckt, um darin den Rücken eines Insassen des Sitzes aufzunehmen,
- ein Sitzkissen (1b, 2b), das sich in einer allgemein horizontalen Ebene in der normalen Sitzposition erstreckt und einen hinteren Querrand, entlang der Unterseite der Rücklehne, und einen gegenüberliegenden vorderen Querrand aufweist,
- eine Sitzstruktur (1c), die sich mindestens unter dem Sitzkissen erstreckt und dort einen Hohlraum (31) begrenzt, der nach oben offen ist und nach vorne durch eine bewegliche Klappe (3) geschlossen ist, die mit dem Sitz, in der normalen Sitzposition, verbunden ist, in der das Sitzkissen (1b, 2b) einen normal gegen die Lehne sitzenden Insassen aufnimmt,
**dadurch gekennzeichnet, dass** das Sitzkissen (1b) schwenkbar in Bezug auf die Sitzstruktur (1c) montiert ist:
- nahe bei seinem vorderen Querrand, um nach vorne aus seiner normalen Sitzposition zu schwenken, um eine vordere Querachse (18a), und so den Zugang von unten zu dem Hohlraum (31) freizugeben, und
- nahe bei seinem hinteren Querrand, um nach hinten aus seiner normalen Sitzposition zu schwenken, um eine hintere Querachse (19a), die im Wesentlichen parallel zur vorderen Querachse ist, und so damit die bewegliche Klappe (3) anzuheben, wodurch ein Durchgang (32) zur Vorderseite des Sitzes zwischen dem Hohlraum und der Außenseite freigelegt wird.

2. Sitz nach Anspruch 1,
**dadurch gekennzeichnet, dass** die Sitzstruktur (1c), für das Sitzkissen (1b, 2b) und die Lehne (10a, 20a), ihr Anlagemittel am Boden definiert, indem diese über den Raum angehoben werden und indem ihr Gewicht getragen wird, so dass die Klappe (3) von diesem Gewicht in der Schließposition des Zugangs (32) in den Raum (31) nach vorne und/oder in der normalen Sitzposition des Sitzkissens befreit wird.

3. Sitz nach einem der Ansprüche 1, 2,
**dadurch gekennzeichnet, dass** dieser umfasst:
- einen Filamentzwischenrahmen (5), der zwischen dem Sitzkissen (1b, 2b) und der Sitzstruktur (1c) bereitgestellt ist und sich unter dem Sitzkissen mindestens entlang den Seitenrändern (1c10, 1c11) und dem vorderen Rand davon erstreckt,
- vordere Schwenkzapfen zwischen dem Sitzkissen und dem Filamentrahmen (5) für das Verschwenken des Sitzkissens um die vordere Querachse (18a), und
- hintere Schwenkzapfen (24, 25) zwischen dem Filamentrahmen (5) und der Sitzstruktur (1c) für das Verschwenken des Sitzkissens, mit diesem Filamentrahmen (5), um die hintere Querachse.

4. Sitz nach einem der Ansprüche 1 bis 3,
**dadurch gekennzeichnet, dass** der Filamentrahmen (5) einen vorderen Querabschnitt (18) aufweist, der sich unter und entlang dem vorderen Rand des Sitzkissens (1b, 2b) erstreckt, und die Klappe (3) mit dem Filamentrahmen (5) verbunden ist und sich entlang dem vorderen Querabschnitt (18) dieses Rahmens erstreckt.

5. Sitz nach einem der Ansprüche 1 bis 3,
**dadurch gekennzeichnet, dass** die Klappe (3) schwenkbar mit dem Filamentrahmen (5) verbunden ist und auf Gleitschienen (13a, 13b) gleitet, die an der Sitzstruktur (1c) befestigt sind und seitlich unter dem Sitzkissen (1b, 2b) angeordnet sind.

6. Kraftfahrzeug, umfassend einen vorderen Bereich von Sitzen und einen hinteren Bereich von Sitzen (100, 101), der hinten angeordnet ist,
**dadurch gekennzeichnet, dass** mindestens einer der Sitze des hinteren Bereichs (100, 101) jener nach einem der Ansprüche 1 bis 5 ist.

7. Kraftfahrzeug nach Anspruch 6,
**dadurch gekennzeichnet, dass** in der normalen Sitzposition des Sitzkissens (1b, 2b) der Filamentrahmen (5) mit der Sitzstruktur (1c) durch einen Haken (7) gehalten wird, der zwischen diesen bereitgestellt ist, und der gelöst werden kann, um das Schwenken zu dem Ort der hinteren Schwenkzapfen (24, 25) zu gestatten.

8. Kraftfahrzeug nach einem der Ansprüche 6, 7,
**dadurch gekennzeichnet, dass** dieses einen Boden (27) umfasst, an dem der Sitz befestigt ist, wobei sich dieser Boden im Wesentlichen horizontal vor dem Sitz erstreckt, unter diesem und hinter diesem, und, unter dem Sitzkissen (1b, 2b), die Sitzstruktur (1c) hinten offen ist und an dem Ort des Hohlraums (31), in der angehobenen Position der Klappe (3), einen freien Durchgang (32) für ein Laden (53) nach vorne und nach hinten bietet.

9. Kraftfahrzeug nach einem der Ansprüche 6 bis 8,
**dadurch gekennzeichnet, dass** der Sitz zwei Rücklehnen (10a, 20a) und zwei Sitzflächen (1b, 2b) Seite an Seite umfasst, wobei sich die Sitzstruktur (1c) gemeinsam unter den beiden Sitzflächen (1b, 2b) erstreckt, und die hinteren Schwenkzapfen (24, 25) einen ersten Schwenkzapfen (24), der unter einem der Sitzkissen angeordnet ist, und einen zweiten Schwenkzapfen (25), der unter dem anderen Sitzkissen angeordnet ist, umfassen, damit die beiden Sitzkissen miteinander um die hinteren Schwenkzapfen verschwenkt werden.

## Claims

1. Seat for a motor vehicle, comprising:
- a rear backrest (10a, 20a) extending in an upright overall plane in order to receive the back of a seat occupant,
- a seat cushion (1b, 2b) extending in a horizontal overall plane in the normal seating position and having a rear transverse edge, along the bottom of the backrest, and an opposite front transverse edge,
- a seat structure (1c) extending at least under the seat cushion and delimiting an empty space (31) there, said empty space (31) being open towards the top and closed at the front by movable flap (3), joined to the seat part, in the normal seating position in which the seat cushion (1b, 2b) receives an occupant sitting normally against the backrest,
**characterized in that** the seat cushion (1b) is mounted so as to be pivotable with respect to the seat structure (1c) :
- close to its front transverse edge in order to tilt forwards from its normal seating position, about a front transverse axis (18a), thereby freeing up the access from above to said empty space (31), and
- close to its rear transverse edge in order to tilt towards the rear from said normal seating position, about a rear transverse axis (19a) substantially parallel to the front transverse axis, and thus lifting with it the movable flap (3), thereby freeing up a passage (32) to the front of the seat between said empty space and the outside.

2. Seat according to Claim 1, **characterized in that** the seat structure (1c) defines, for the seat cushion (1b, 2b) and the backrest (10a, 20a), the means for supporting the latter on the floor, raising them above said space and supporting their weight, such that the flap (3) does not bear this weight in the position closing the access (32) to said space (31), from the front, and/or in the normal seating position of the seat cushion.

3. Seat according to either of Claims 1 and 2, **characterized in that** it comprises:
- an intermediate wire frame (5) established between the seat cushion (1b, 2b) and the seat structure (1c) and extending under the seat cushion, at least along the lateral sides (1c10, 1c11) and the front edge of the latter,
- front pivots between the seat cushion and the wire frame (5), for said tilting of the seat cushion about the front transverse axis (18a), and
- rear pivots (24, 25) between the wire frame (5) and the seat structure (1c) for said tilting of the seat cushion, with this wire frame (5), about the rear transverse axis.

4. Seat according to one of Claims 1 to 3, **characterized in that** the wire frame (5) has a front transverse portion (18) extending under and along said front edge of the seat cushion (1b, 2b) and the flap (3) is joined to the wire frame (5) and extends along said front transverse portion (18) of this frame.

5. Seat according to one of Claims 1 to 3, **characterized in that** the flap (3) is joined to the wire frame (5) in a pivotable manner and slides on runners (13a, 13b) that are fastened to the seat structure (1c) and stand laterally in an upright manner under the seat cushion (1b, 2b).

6. Motor vehicle comprising a front row of seats and a rear row of seats (100, 101) located behind, **characterized in that** at least one of the seats of the rear row (100, 101) is the one according to one of Claims 1 to 5.

7. Vehicle according to Claim 6, **characterized in that**, in the normal seating position of the seat cushion (1b, 2b), the wire frame (5) is held with the seat structure (1c) by a hook (7) which is provided therebetween and which can be decoupled in order to allow the tilting at the rear pivots (24, 25).

8. Vehicle according to either of Claims 6 and 7, **characterized in that** it comprises a floor pan (27) to which the seat is fastened, this floor pan extending substantially horizontally in front of the seat, under the latter and behind the latter, and, under the seat cushion (1b, 2b), the seat structure (1c) is open at the rear and provides, at the empty space (31), in the lifted position of the flap (3), a free passage (32) for a load (53) to the front and to the rear.

9. Vehicle according to one of Claims 6 to 8, **characterized in that** the seat comprises two backrests (10a, 20a) and two seat parts (1b, 2b) side by side, the seat structure (1c) extending in a common manner under the two seat parts (1b, 2b) and the rear pivots (24, 25) comprise a first pivot (24) situated under one of the seat cushions and a second pivot (25) situated under the other seat cushion in order that the two seat cushions pivot together about said rear pivots.
